# FASCICULE DE BREVET EUROPEEN

(11) **EP 4 027 363 B1**
(45) Date de publication et mention de la délivrance du brevet: **18.12.2024**
(21) Numéro de dépôt: 22150558.9
(22) Date de dépôt: 07.01.2022
(51) Int. Cl.: H01H 9/26, H01H 9/28

(54) **DISPOSITIF DE VERROUILLAGE POUR UN TABLEAU ÉLECTRIQUE**
VERRIEGELUNGSVORRICHTUNG FÜR EINE SCHALTTAFEL
LOCKING DEVICE FOR AN ELECTRICAL SWITCHBOARD

(30) Priorité: 08.01.2021 FR 2100171
(43) Date de publication de la demande: 13.07.2022
(73) Titulaire: Schneider Electric Industries SAS, 92500 Rueil-Malmaison (FR)
(72) Inventeur: BURNOT, Claude, 38130 ECHIROLLES (FR); LEBEAU, Bernard, 38190 LES ADRETS (FR)
(74) Mandataire: Lavoix

(56) Documents cités:
- CN-U- 210 223 830
- CN-Y- 2 870 119
- CN-Y- 201 112 305
- FR-A1- 3 054 925
- US-A- 3 492 448

## Description

La présente invention concerne un dispositif de verrouillage pour un tableau électrique, ainsi qu'un système électrique comprenant un tel dispositif de verrouillage.

L'invention se rapporte notamment au domaine de la distribution d'électricité, de préférence pour les basses tensions (c'est-à-dire des tensions électriques inférieures ou égales à 1000 V AC ou à 1500 V DC).

Dans les installations de distribution d'électricité, notamment dans un cadre domestique ou dans des bâtiments résidentiels ou commerciaux, il devient de plus en plus courant de disposer de plusieurs sources d'électricité. Par exemple, une installation d'un client peut être prévue pour être raccordée à un réseau de distribution d'électricité, ainsi qu'à une source d'électricité locale, telle qu'un groupe électrogène, ou des panneaux solaires, ou un dispositif de stockage d'électricité.

Dans de nombreux cas, les sources d'électricité sont connectées à un tableau électrique en amont de l'installation du client. Un dispositif de connexion permet de sélectionner une seule de ces sources, qui va ensuite alimenter l'installation située en aval.

Il est important que les deux sources d'électricité ne puissent pas être connectées simultanément par l'utilisateur, au risque de causer des dommages irréversibles sur l'installation.

Il existe des dispositifs de connexion comportant un système de verrouillage (interverrouillage, ou « interlocking » en anglais) qui garantit que seule une des sources d'électricité puisse être connectée à un instant donné.

Toutefois, ces dispositifs de connexion sont parfois volumineux, voire compliqués à fabriquer et à installer et à sélectionner. Et leur maniement par l'utilisateur final n'est pas toujours simple, ce qui peut augmenter le risque d'accident.

US-3 492 448-A décrit, par exemple, un dispositif d'interverrouillage formé d'une plaque carrée montée basculante entre deux appareils de commutation comprenant chacun des leviers de commande. Lorsque les leviers d'un premier des deux appareils sont basculés en position basse fermée, les leviers de l'autre appareil sont repoussés vers leur position haute ouverte. Cependant, lorsque les leviers des deux appareils sont en position haute ouverte, le dispositif d'interverrouillage n'empêche pas de déplacer les leviers de l'un des deux appareils vers la position basse fermée, ce qui laisse subsister un risque de manipulation fautive.

CN-2 870 119-Y décrit, quant à lui, un dispositif de verrouillage comprenant un organe de verrouillage monté pivotant sur un boitier entre deux disjoncteurs, l'organe de verrouillage contrôlant les positions de deux leviers appartenant à chacun des disjoncteurs. Cependant, lorsque les leviers des deux appareils sont en position basse ouverte, le dispositif de verrouillage n'empêche pas de déplacer les leviers de l'un des deux disjoncteurs vers sa position haute, ce qui laisse subsister un risque de manipulation fautive.

Il existe donc un besoin pour des dispositifs de connexion qui soient simples à utiliser et qui présentent une conception simplifiée, tout en étant néanmoins capables de garantir la sécurité requise.

À cet effet, un dispositif de verrouillage pour un tableau électrique comporte :
- un boîtier destiné à être monté sur un tableau électrique entre un premier appareil de commutation et un deuxième appareil de commutation, chacun des appareils de commutation comportant un levier de commande déplaçable entre une position basse correspondant à un état ouvert et une position haute correspondant à un état fermé ;
- un organe de verrouillage déplaçable en rotation autour d'un axe de rotation essentiellement perpendiculaire à une face avant du boîtier, l'organe de verrouillage comportant un bord de blocage, un premier bord de contact et un deuxième bord de contact, le bord de blocage se trouvant entre le premier bord de contact et le deuxième bord de contact ;
l'organe de verrouillage étant réversiblement déplaçable entre :
- une première position de verrouillage, dans laquelle l'organe de verrouillage bloque le levier de commande du premier appareil de commutation en position ouverte, par coopération du bord de blocage avec le levier de commande du premier appareil de commutation, le deuxième bord de contact étant aligné avec la direction de déplacement du levier de commande du deuxième appareil de commutation pour autoriser le déplacement du levier de commande du deuxième appareil de commutation vers sa position fermée, et
- une deuxième position de verrouillage, dans laquelle l'organe de verrouillage bloque le levier de commande du deuxième appareil de commutation en position ouverte, par coopération du bord de blocage avec le levier de commande du deuxième appareil de commutation, le premier bord de contact étant aligné avec la direction de déplacement du levier de commande du premier appareil de commutation pour autoriser le déplacement du levier de commande du premier appareil de commutation vers sa position fermée.

Selon l'invention, l'organe de verrouillage est également déplaçable dans une troisième position de verrouillage intermédiaire entre la première position de verrouillage et la deuxième position de verrouillage, dans laquelle le premier levier de commande et le deuxième levier de commande sont tous deux maintenus dans la position ouverte.

Grâce à l'invention, le dispositif de verrouillage permet d'implémenter facilement une fonction de verrouillage de sécurité entre deux appareils de commutation électrique. En particulier, la conception modulaire du dispositif de verrouillage qui permet de l'associer facilement à des appareils de commutation existants, sans avoir besoin de modifier l'architecture de ces appareils de commutation. Cela contraste avec les dispositifs de verrouillage connus, qui généralement intègrent à la fois les appareils de verrouillage ainsi que la fonction de verrouillage dans un seul appareil, ce qui est une solution plus complexe et moins flexible.

Par ailleurs, le dispositif de verrouillage est particulièrement simple et intuitif à utiliser pour un utilisateur, sans pour autant compromettre la sécurité du fonctionnement, ce qui est important pour un dispositif destiné à être utilisé dans un environnement domestique ou commercial, par des utilisateurs n'étant pas experts en sécurité électrique.

Selon des aspects avantageux mais non obligatoires, un tel dispositif de verrouillage peut incorporer une ou plusieurs des caractéristiques suivantes, prises isolément ou suivant toutes combinaisons techniquement admissibles :
- L'organe de verrouillage comporte au moins un orifice permettant l'insertion d'un outil de verrouillage, afin de maintenir l'organe de verrouillage bloqué dans au moins une position de verrouillage.
- L'organe de verrouillage est en forme de plaque, notamment triangulaire ou essentiellement triangulaire ou de papillon, le bord de blocage ayant une forme arrondie, ou une forme à facettes, les bords de contact ayant chacun une forme rectiligne.
- L'organe de verrouillage comporte une portion de préhension faisant saillie par rapport à une face principale de l'organe de verrouillage.
- Le dispositif de verrouillage comporte au moins un capteur configuré pour mesurer la position de l'organe de verrouillage.
- Le capteur est un interrupteur à contact, l'organe de verrouillage comporte une portion de fixation, et la portion de fixation comporte une came qui coopère avec un contact mobile de l'interrupteur à contact.
- La portion de fixation est de forme tubulaire, s'étend selon l'axe de rotation et est reçue dans un logement formé dans le boîtier du dispositif de verrouillage.
- Le dispositif de verrouillage comporte deux tels capteurs, disposés de façon complémentaire afin de détecter le déplacement de l'organe de verrouillage au moins entre la première position et la deuxième position.
- Le dispositif de verrouillage est en outre configuré pour détecter que l'organe de verrouillage est dans une troisième position dans laquelle les premier et deuxième leviers de commande sont maintenus dans une position ouverte.
- Le logement recevant la portion de fixation comporte un raidisseur, tel qu'une languette en plastique, qui offre une résistance au mouvement de rotation de l'organe de verrouillage pour un point milieu entre la première position et la deuxième position.
- Le boîtier du dispositif de verrouillage comporte un système d'alignement et d'accrochage configuré pour coopérer avec les boîtiers respectifs du premier appareil de commutation et du deuxième appareil de commutation.
- Les parois latérales du boîtier du dispositif de verrouillage comportent un ou plusieurs plots de centrage qui font saillie par rapport à la paroi latérale et qui sont destinés à être reçus dans des orifices de réception correspondants ménagés sur les faces latérales des boîtiers respectifs du premier appareil de commutation et du deuxième appareil de commutation.
- Les parois latérales du boîtier du dispositif de verrouillage comportent des éléments de fixation, tels que des crochets, configurés pour être accrochés à des orifices ou ouvertures ménagés sur les faces latérales des boîtiers respectifs du premier appareil de commutation et du deuxième appareil de commutation.

Selon un autre aspect, l'invention concerne un système électrique, comportant un dispositif de verrouillage tel que décrit, un premier appareil de commutation et un deuxième appareil de commutation, le dispositif de verrouillage étant monté sur un tableau électrique entre le premier appareil de commutation et le deuxième appareil de commutation.

L'invention sera mieux comprise et d'autres avantages de celle-ci apparaîtront plus clairement à la lumière de la description qui va suivre d'un mode de réalisation d'un dispositif de verrouillage donnée uniquement à titre d'exemple et faite en référence aux dessins annexés, dans lesquels :
[Fig 1] La figure 1 représente schématiquement, selon une vue éclatée, un système électrique comportant un dispositif de verrouillage conforme à des modes de réalisation de l'invention, le dispositif de verrouillage étant associé à un premier appareil de commutation et à un deuxième appareil de commutation ;
[Fig 2] La figure 2 représente schématiquement le système électrique de la figure 1, dans lequel un levier de verrouillage du dispositif de verrouillage est dans une première position de verrouillage ;
[Fig 3] La figure 3 représente schématiquement le système électrique de la figure 1, dans lequel l'organe de verrouillage du dispositif de verrouillage est dans une deuxième position de verrouillage ;
[Fig 4] La figure 4 représente schématiquement, sur ses inserts (a) et (b), deux vues internes du dispositif de verrouillage et de l'organe de verrouillage de la figure 1 ;
[Fig 5] La figure 5 représente schématiquement une vue extérieure du boîtier du dispositif de verrouillage de la figure 1, montrant un raidisseur coopérant avec l'organe de verrouillage ;
[Fig 6] La figure 6 représente schématiquement le système électrique de la figure 1, dans lequel l'organe de verrouillage du dispositif de verrouillage est dans une position intermédiaire et dans laquelle le premier appareil de commutation et le deuxième appareil de commutation sont condamnés dans un état ouvert par l'organe de verrouillage ;
[Fig 7] La figure 7 représente schématiquement une variante du système électrique, dans lequel l'organe de verrouillage est couplé à un outil de verrouillage ;
[Fig 8] La figure 8 représente schématiquement un autre état du système électrique de la figure 6, dans lequel l'organe de verrouillage ne peut être actionné en raison de la soudure des contacts du premier appareil de commutation ;
[Fig 9] La figure 9 représente schématiquement la variante du système électrique de la figure 7, illustrée dans une position intermédiaire telle que celle illustrée à la figure 6, et dans lequel l'organe de verrouillage est couplé à un outil de verrouillage, et
[Fig 10] La figure 10 représente schématiquement un orifice ménagé dans la variante du système électrique des figures 6 et 9 pour recevoir l'outil de verrouillage.

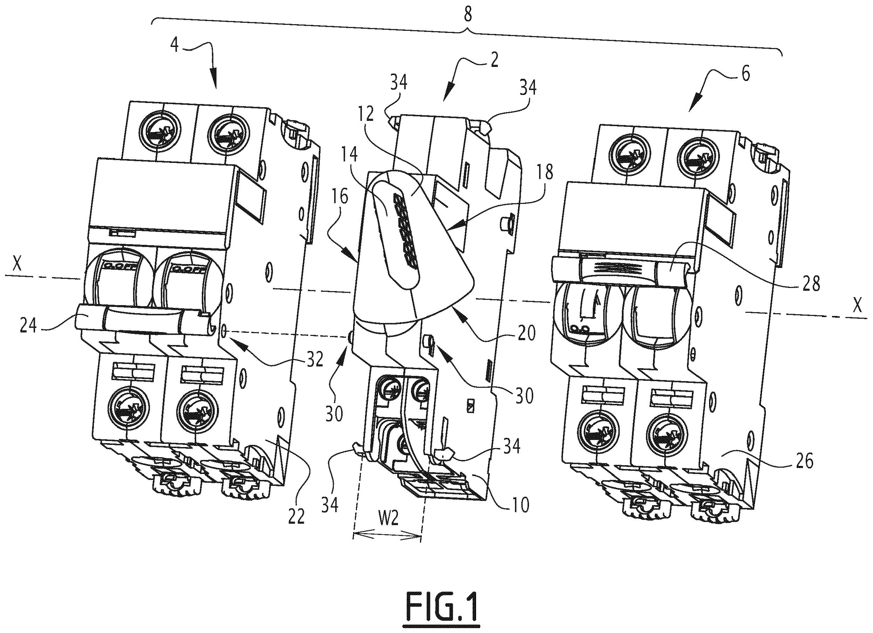

Les figures 1, 2 et 3 représentent un dispositif de verrouillage 2, par exemple destiné à être monté dans un tableau électrique entre un premier appareil de commutation électrique 4 et un deuxième appareil de commutation électrique 6.

En pratique, de préférence, le dispositif de verrouillage 2 et les appareils de commutation 4 et 6 sont alignés le long d'un même axe géométrique X lorsqu'ils sont associés entre eux.

Par exemple, le dispositif de verrouillage 2 et les appareils de commutation 4 et 6 peuvent être montés sur un rail de fixation, tel qu'un rail de fixation au format standardisé « DIN ». Sur la figure 1, la direction du rail de fixation correspond à la direction de l'axe X.

Selon un exemple, le premier appareil de commutation électrique 4 et un deuxième appareil de commutation électrique 6 sont des interrupteurs.

En variante, les appareils de commutation électrique 4 et/ou 6 pourraient être des disjoncteurs. De préférence, les caractéristiques des appareils de commutation 4 et 6, telles que le nombre de pôles et/ou les calibres en courant, sont adaptées aux caractéristiques des circuits électriques situés en amont du système électrique 8.

Le premier et le deuxième appareil de commutation électrique 4 et 6 sont chacun commutables entre un état électriquement ouvert et un état électriquement fermé. Dans ce qui suit, le terme « position » pourra être utilisé pour faire référence à un état d'un appareil de commutation 4 ou 6.

Chacun des appareils de commutation 4, 6 comporte un levier de commande déplaçable entre une position basse correspondant à l'état ouvert de l'appareil, et une position haute correspondant à l'état fermé de l'appareil.

Par exemple, chacun des leviers de commande est déplaçable entre ses positions basses et hautes par pivotement autour d'un deuxième axe de rotation parallèle à l'axe X.

Une fois associés, le dispositif de verrouillage 2, le premier appareil de commutation électrique 4 et le deuxième appareil de commutation électrique 6 forment un système électrique 8 utilisable pour raccorder sélectivement l'une ou l'autre de deux sources électriques en amont d'une installation électrique.

Le dispositif de verrouillage 2 est notamment configuré pour assurer une fonction de verrouillage de sécurité, dite d'interverrouillage, (« interlocking » en anglais) pour faire en sorte que seul l'un des appareils de commutation 4 ou 6 soit dans un état fermé à un même instant.

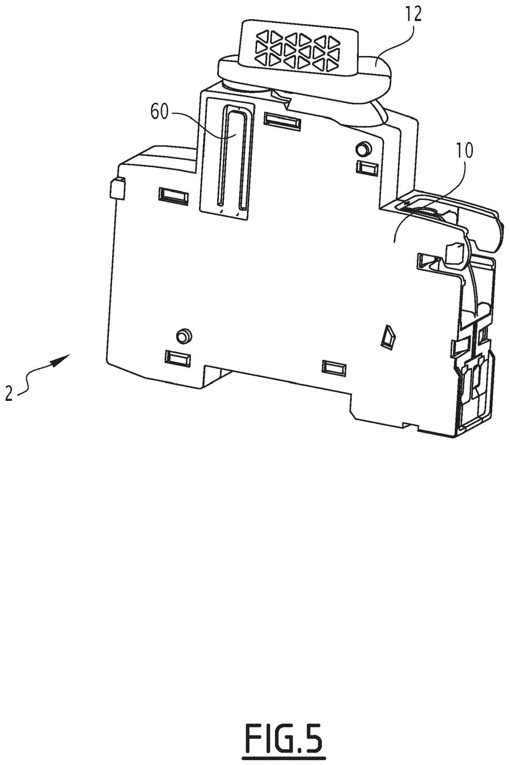

Pour ce faire, le dispositif de verrouillage 2 comporte :
- un boîtier 10 destiné à être monté sur un tableau électrique,
- un organe de verrouillage 12, tel qu'un levier de verrouillage ou un bouton rotatif, déplaçable en rotation autour d'un axe de rotation (noté « Y » sur la figure 5) essentiellement perpendiculaire, et de préférence perpendiculaire, à une face avant du boîtier.

L'organe de verrouillage 12 comporte un bord de blocage 20, un premier bord de contact 16 et un deuxième bord de contact 18, le bord de blocage se trouvant entre le premier bord de contact et le deuxième bord de contact.

Par exemple, le premier bord de contact 16 et le deuxième bord de contact 18 convergent vers un point supérieur de l'organe de verrouillage orienté vers le haut du dispositif de verrouillage 2, tandis que le bord de blocage 20 est tourné vers le bas de l'organe de verrouillage 2.

Par exemple, l'organe de verrouillage 12 est en forme de plaque. De préférence, la plaque a une forme triangulaire ou essentiellement triangulaire ou une forme de papillon. De façon préférentielle, la plaque a une forme qui présente une symétrie par rapport à un plan de symétrie, qui correspond ici à un plan médian de l'organe de verrouillage 12. Notamment, le premier bord de contact 16 est disposé de façon symétrique par rapport au deuxième bord de contact 18.

Dans l'exemple illustré, l'organe de verrouillage 12 comporte une portion de préhension 14 faisant saillie par rapport à une face principale de l'organe de verrouillage.

Dans l'exemple illustré, le bord de blocage 20 a une forme arrondie, les bords de contact 16 et 18 ayant chacun une forme rectiligne.

Le premier appareil de commutation 4 comporte un boîtier 22 et un levier de commande 24 tel que décrit précédemment.

Le deuxième appareil de commutation 6 comporte un boîtier 26 et un levier de commande 28 tel que décrit précédemment.

De préférence, les leviers de commande 24 et 28 sont situés sur des faces avant des boîtiers 22 et 26. De même, l'organe de verrouillage 12 est situé sur une face avant du boîtier 10.

L'organe de verrouillage 12 est réversiblement déplaçable entre :
- une première position de verrouillage, dans laquelle l'organe de verrouillage 12 bloque le levier de commande 24 du premier appareil de commutation 4 en position ouverte (i.e. en position basse du levier de commande), et
- une deuxième position de verrouillage, dans laquelle l'organe de verrouillage 12 bloque le levier de commande 28 du deuxième appareil de commutation 6 en position ouverte (i.e. en position basse du levier de commande).

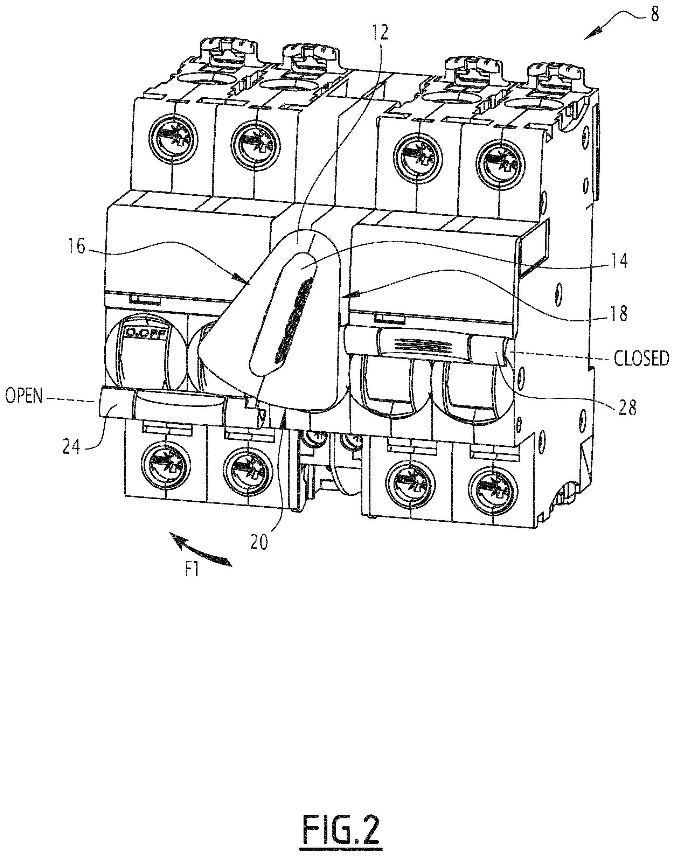

Dans la première position de verrouillage, visible sur la figure 2, l'organe de verrouillage 12 bloque le levier de commande 24 du premier appareil de commutation 4 en position ouverte (« OPEN ») par coopération du bord de blocage 20 avec le levier de commande du premier appareil de commutation, qui agit comme une butée contre le levier de commande.

Par exemple, cette position est obtenue en tournant l'organe de verrouillage 12 selon le sens de rotation représenté par la flèche F1.

Dans cette position, le deuxième bord de contact 18 est aligné avec la direction de déplacement du levier de commande 28 du deuxième appareil de commutation 6 pour autoriser le déplacement du levier de commande du deuxième appareil de commutation vers sa position fermée (« CLOSED »).

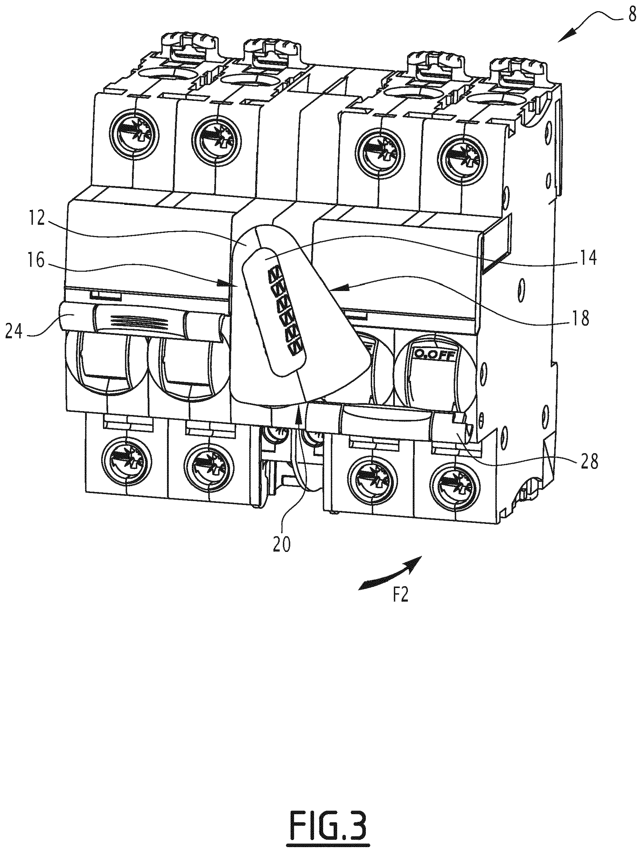

Dans la deuxième position de verrouillage, visible sur la figure 3, l'organe de verrouillage 12 bloque le levier de commande 28 du deuxième appareil de commutation 6 en position ouverte, par coopération du bord de blocage avec le levier de commande 28 du deuxième appareil de commutation 6.

Par exemple, cette position est obtenue en tournant l'organe de verrouillage 12 selon le sens de rotation représenté par la flèche F2 (sens opposée à la flèche F1).

Dans cette position, le premier bord de contact 16 est aligné avec la direction de déplacement du levier de commande 24 du premier appareil de commutation 4 pour autoriser le déplacement du levier de commande 24 du premier appareil de commutation 4 vers sa position fermée.

Ainsi, le dispositif de verrouillage 2 est particulièrement simple et intuitif à utiliser pour un utilisateur, sans pour autant compromettre la sécurité du fonctionnement, ce qui est important lorsque le dispositif de verrouillage 2 est utilisé dans un environnement domestique ou commercial, par des utilisateurs n'étant pas experts en sécurité électrique.

De plus, l'organe de verrouillage 12 en façade fournit une indication visuelle sur l'état de l'installation, et permet de voir immédiatement lequel des deux appareils est verrouillé dans l'état ouvert.

Par exemple, le boîtier 10 est réalisé en matériau polymère, tel qu'une matière plastique, notamment du plastique moulé. Le boîtier 10 peut être assemblé à partir de deux demi-coques de formes complémentaires ou symétriques.

De préférence, le boîtier 10 présente une largeur (notée W2 sur la figure 1) inférieure à 20mm, par exemple égale à 18mm, correspondant à une largeur standardisée.

En pratique, la forme et les dimensions du boîtier 10 sont compatibles avec celles des boîtiers 22 et 26 des appareils de commutation 4 et 6. Par exemple, les boîtiers 10, 22 et 26 ont une même hauteur et une même profondeur.

De préférence, le boîtier 10 comporte un système d'alignement et d'accrochage configuré pour coopérer avec les boîtiers respectifs du premier appareil de commutation 4 et du deuxième appareil de commutation 6.

A titre d'exemple, les parois latérales du boîtier 10 du dispositif de verrouillage 2 peuvent comporter un ou plusieurs plots de centrage 30 qui font saillie par rapport à la paroi latérale et qui sont destinés à être reçus dans des orifices de réception correspondants 32 ménagés sur les faces latérales des boîtiers 22 et 26.

Optionnellement, les parois latérales du boîtier 10 peuvent aussi comporter des éléments de fixation 34, tels que des crochets, destinés à s'accrocher à des orifices ou ouvertures ménagés sur les faces latérales des boîtiers 22 et 26.

Dans une configuration assemblée du système électrique 8, les plots de centrage 30 sont insérés dans les orifices 32 des boîtiers 22 et 26.

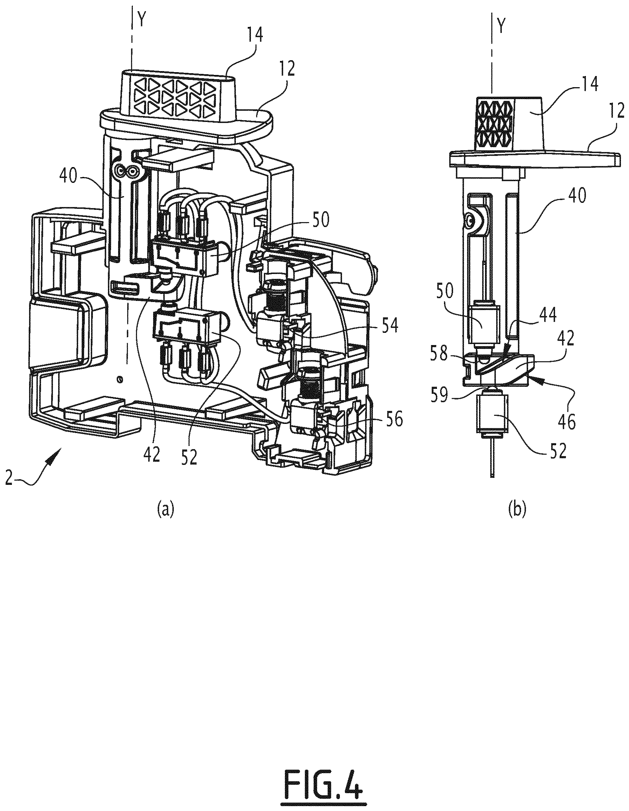

L'insert (a) de la figure 4 représente une vue interne du dispositif de verrouillage 2. Par exemple, l'une des demi-coques du boîtier 10 est retirée afin de rendre visible l'intérieur du dispositif de verrouillage 2.

L'organe de verrouillage 12 comporte une portion de fixation 40 (aussi nommée portion de guidage) de forme tubulaire qui s'étend selon l'axe de rotation de l'organe de verrouillage 12 (noté « Y » sur cette figure).

La portion de fixation 40 est ici reçue dans un logement formé dans le boîtier du dispositif de verrouillage, notamment afin de permettre une liaison pivot autorisant la rotation de l'organe de verrouillage 12 par rapport au boîtier 10.

Par exemple, la portion de fixation 40 est réalisée d'un seul tenant avec l'organe de verrouillage 12. La portion de fixation 40 peut ainsi être réalisée en matière plastique, ou dans tout matériau approprié.

Avantageusement, le dispositif de verrouillage comporte au moins un capteur configuré pour mesurer la position du levier de verrouillage 12.

De préférence, le dispositif de verrouillage 2 comporte deux tels capteurs, ici notés 50 et 52, disposés de façon complémentaire afin de détecter le déplacement de l'organe de verrouillage 12 au moins entre la première position et la deuxième position. De préférence, les capteurs 50 et 52 permettent de détecter un déplacement dans la troisième position (position intermédiaire) notamment pour déterminer que l'organe de verrouillage est dans une troisième position dans laquelle les premier et deuxième leviers de commande 24, 28 sont maintenus dans une position ouverte.

Par exemple, chaque capteur est un interrupteur à contact, comportant un contact mobile faisant office de portion sensible capable de détecter lorsqu'un objet vient appuyer sur le contact mobile.

De préférence, pour détecter la position et/ou le déplacement de l'organe de verrouillage 12, la portion de fixation 40 comporte une came 42 qui coopère avec le contact mobile du capteur ou de chaque capteur 50, 52.

Par exemple, la came 42 s'étend en saillie par rapport à la portion de fixation, selon une direction radiale perpendiculaire à l'axe de rotation Y. De préférence, la came 42 est rigide. Par exemple, la came 42 est formée dans un même matériau que le reste de la portion de fixation 40.

Optionnellement, des bornes 54 et 56 permettent de raccorder les sorties des capteurs 50 et 52, en vue de collecter les signaux de mesure pour leur exploitation par un dispositif de traitement de données (non illustré).

L'insert (b) de la figure 4 représente un mode de réalisation de la portion de fixation 40 de l'organe de verrouillage 12, ici illustrée alignée suivant l'axe de rotation Y. Ce mode de réalisation est particulièrement utilisé dans le cas où le dispositif de verrouillage 2 comporte deux interrupteurs à contacts 50, 52 disposés comme décrit ci-dessus.

La came 42 comporte une face inclinée supérieure 44 et une face inclinée inférieure 46, qui de préférence présentent le même angle d'inclinaison par rapport à l'axe de rotation Y. Dans l'exemple illustré, la face inclinée supérieure 44 coopère avec le contact mobile 58 du premier capteur 50, tandis que la face inclinée inférieure 46 coopère avec le contact mobile 59 du deuxième capteur 52.

Les faces inclinées 44 et 46 sont orientées de telle sorte que, lorsque l'organe de verrouillage 12 est mis en rotation dans un sens ou dans l'autre, l'une des parties mobiles 58, 59 cesse d'être en contact avec la came 42, tandis que l'autre des parties mobiles 58, 59 entre en contact avec la came 42. Lorsque l'organe de verrouillage 12 est dans la première position de verrouillage ou dans la deuxième position de verrouillage, seule l'une ou l'autre des parties mobiles 58 et 59 est en contact avec la came 42.

Cette disposition permet de détecter non seulement la position de l'organe de verrouillage 12, mais aussi le sens de déplacement de l'organe de verrouillage 12, et permet d'identifier plus facilement une anomalie, telle qu'une panne d'un des capteurs 50 ou 52.

De façon préférentielle mais néanmoins optionnelle, comme illustré par la figure 5, le logement du dispositif de verrouillage 2 recevant la portion de fixation 40 comporte un raidisseur 60, tel qu'une languette en plastique. Le raidisseur 60 est configuré pour exercer une résistance au mouvement de rotation de l'organe de verrouillage 12 pour un point milieu entre la première position et la deuxième position lorsque l'organe de verrouillage 12 est mis en rotation autour de son axe de rotation Y.

Cela permet d'assurer un retour tactile perceptible par l'utilisateur lorsqu'il tourne l'organe de verrouillage 12, par exemple en faisant ressentir à l'utilisateur un « point dur » lorsque l'organe de verrouillage 12 franchit ledit point milieu.

Par exemple, la languette 60 est réalisée d'un seul tenant avec la paroi du boîtier 10.

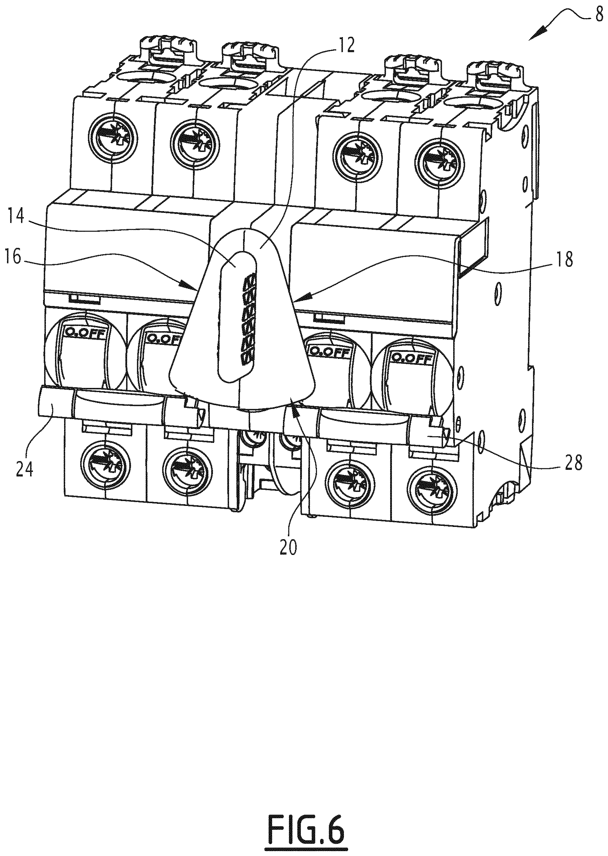

Avantageusement, comme illustré par la figure 6, l'organe de verrouillage 12 est également déplaçable dans une troisième position de verrouillage intermédiaire entre la première position de verrouillage et la deuxième position de verrouillage.

Dans cette troisième position de verrouillage, le premier levier de commande 24 et le deuxième levier de commande 28 sont tous deux maintenus dans la position ouverte, par exemple, pour assurer des opérations de maintenance en aval.

Par exemple, l'organe de verrouillage 12 peut être orienté dans une position intermédiaire, qui dans cet exemple correspond à un alignement selon une direction verticale lorsque le dispositif de verrouillage 2 est monté avec sa face avant montée verticalement, de manière à ce que les extrémités du bord de blocage 20 forment une butée empêchant la remontée des leviers de commande 24 et 28 vers leur position haute, ce qui empêche les appareils 4 et 6 de commuter vers leur état fermé.

Ainsi, les deux leviers de commande 24 et 28 sont bloqués en position ouverte par l'organe de verrouillage 12, de telle sorte qu'il n'y a que ou avec très peu de jeu mécanique, voire aucun jeu mécanique dans le système.

Cela procure une sécurité additionnelle, et permet d'assurer la maintenance de l'installation en aval du système électrique 8, en garantissant que les appareils 4 et 6 restent ouverts, et donc que l'installation connectée en aval du système électrique 2 ne puisse pas être alimentée électriquement par les sources situées en amont.

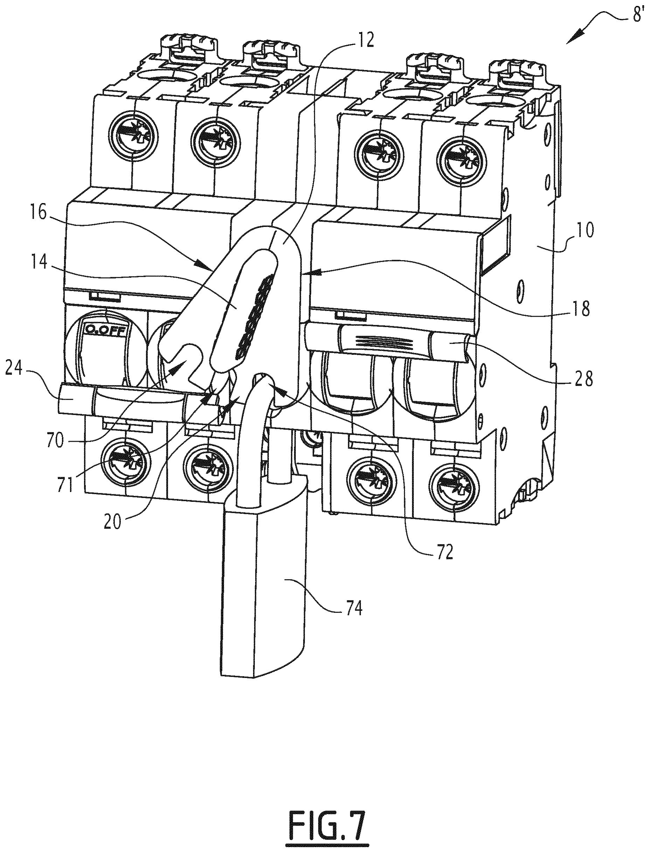

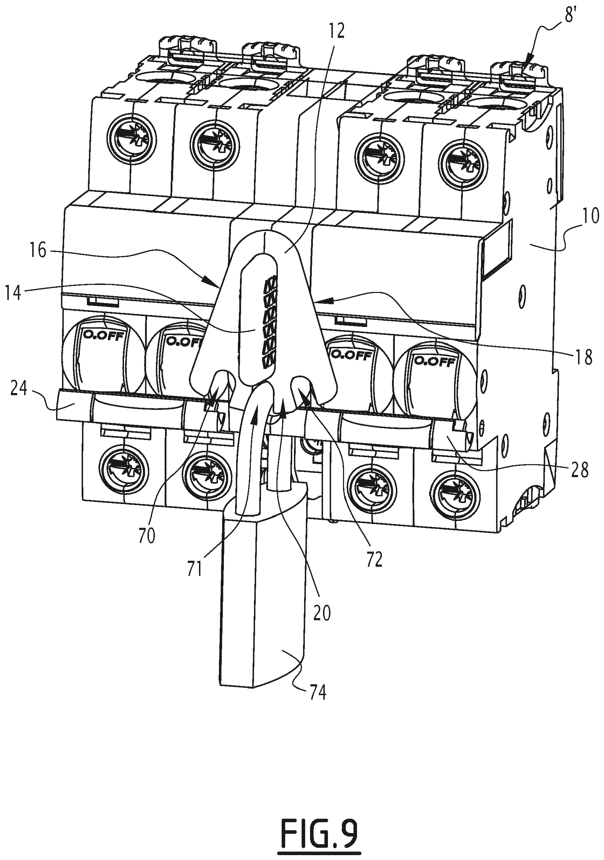

Optionnellement, comme illustré dans la variante 8' visible sur les figures 7, 9 et 10, l'organe de verrouillage 12 peut comporter au moins un orifice 70, 71, 72 (et de préférence plusieurs orifices, notamment trois orifices) permettant l'insertion d'un outil de verrouillage 74, tel qu'un cadenas. Ces orifices 70, 71 et 72 sont par exemple des orifices traversants qui traversent la plaque perpendiculairement au plan de la plaque.

Cela permet de maintenir l'organe de verrouillage 12 bloqué dans au moins une position de verrouillage, et de préférence dans l'une quelconque des première, deuxième et troisième positions de verrouillage (dans les variantes où l'organe de verrouillage 12 comporte trois orifices 70, 71 et 72).

Par exemple, pour pouvoir maintenir l'organe de verrouillage 12 bloqué dans la première position de verrouillage, un orifice est ménagé dans une partie de l'organe de verrouillage située du côté du deuxième bord de contact 18.

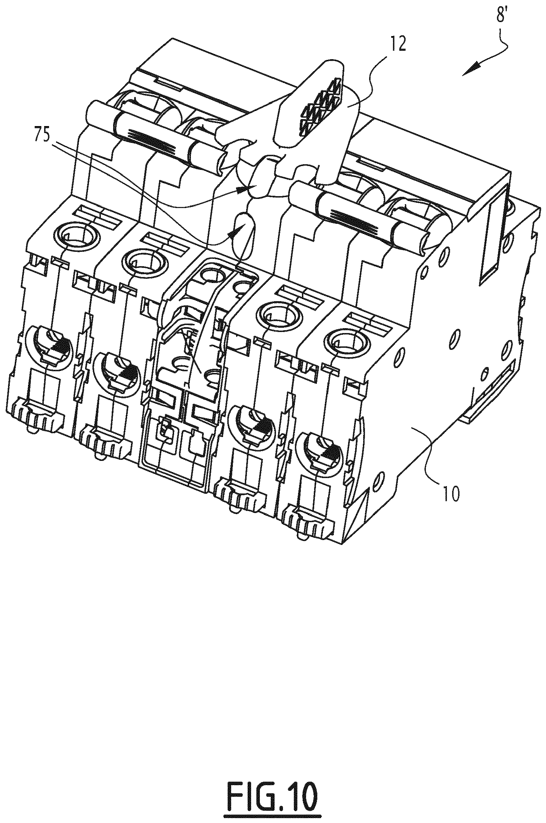

Ainsi, lorsque l'organe de verrouillage 12 est tourné dans le sens de la flèche F1, ledit orifice 72 est aligné verticalement avec un orifice complémentaire 75 ménagé dans le boîtier du dispositif de verrouillage 2, comme visible sur la figure 10, ce qui permet à l'outil de verrouillage de bloquer la rotation de l'organe de verrouillage. Par exemple, lorsque l'outil de verrouillage est un cadenas, l'arceau du cadenas est engagé dans les deux orifices alignés : l'orifice 70, 71 ou 72 de l'organe de verrouillage, et l'orifice complémentaire 75.

En variante, l'orifice complémentaire 75 et/ou les orifices 70, 71 et/ou 72 pourraient présenter une forme différente et/ou un agencement différent. Et, bien que l'orifice complémentaire 75 soit ici visible uniquement sur la variante 8' de la figure 10, on comprend que cette description est transposable aux autres variantes du dispositif de verrouillage 2, et notamment à celles dans laquelle l'orifice 71 est omis.

Une disposition similaire peut être prévue pour un autre orifice 70 par rapport au premier bord de contact 16 afin de bloquer le levier de commande 12 dans la deuxième position. Un troisième orifice 71 permettant de bloquer le levier de commande 12 dans la position intermédiaire peut être placé au milieu du bord 20, par exemple entre les deux autres orifices 70 et 72. Cet orifice 71 peut toutefois être omis dans certaines variantes.

On notera que, sur cette figure, les éléments de la variante 8' qui portent les mêmes signes de référence que les éléments précédemment décrits sont identiques ou similaires à ces éléments. La description qui en a été faite peut ainsi être transposée à la variante 8'.

Si nécessaire, le boîtier 10 du dispositif de verrouillage 2 peut aussi comporter un ou plusieurs orifices correspondants pour fixer ledit outil de verrouillage 74 et l'empêcher de se déplacer lorsque l'organe de verrouillage 12 est tourné alors que l'outil de verrouillage 74 y est attaché.

Dans l'exemple illustré, les orifices 70, 71, 72 sont des incisions formées dans l'organe de verrouillage 12 depuis le bord de blocage 20. Cet exemple n'est pas limitatif et d'autres implémentations sont possibles en variante.

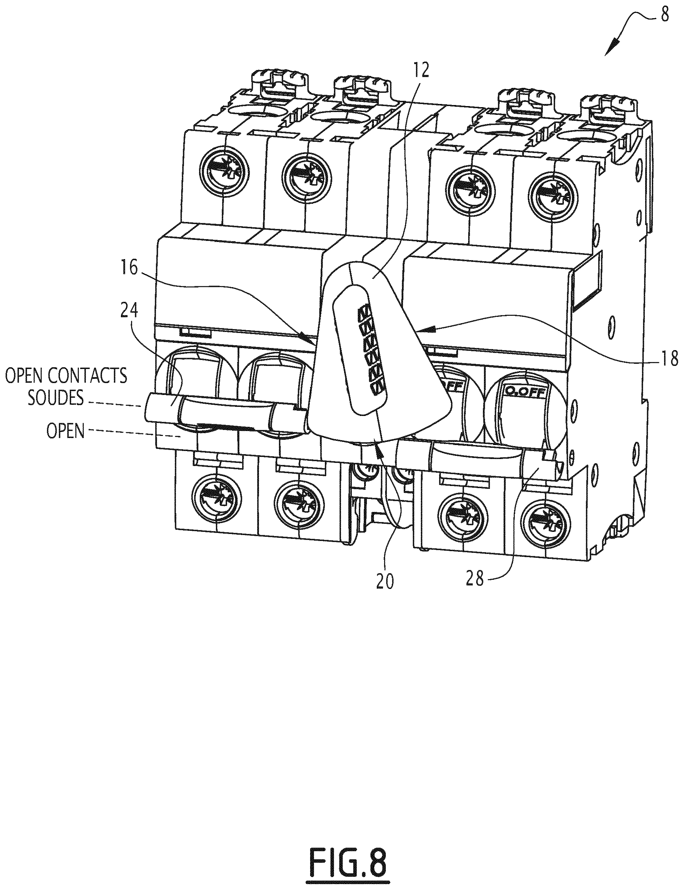

La figure 8 illustre une application avantageuse du dispositif de verrouillage 2 lorsqu'un des appareils de commutation subit une défaillance électrique et reste dans un état électriquement fermé, par exemple suite à une soudure accidentelle des contacts électriques internes à cet appareil.

Dans un tel cas, comme cela est visible sur l'appareil 4 de la figure 8, l'organe de commande correspondant (ici le levier de commande 24) est alors dans une position intermédiaire (position « 'OPEN CONTACTS SOUDES » sur la figure 8), distincte mais néanmoins voisine de la position ouverte (« OPEN »). Notamment, la position intermédiaire correspond à une position du levier plus haute que la position ouverte.

Cependant, grâce aux dimensions de l'organe de verrouillage 12, le premier bord de contact 16 vient en butée contre le premier levier de commande 24, ce qui empêche toute rotation de l'organe de verrouillage 12 vers la première position de verrouillage et force l'organe de verrouillage 12 à rester dans la deuxième position de verrouillage.

En d'autres termes, il est impossible de déverrouiller le deuxième appareil 6, qui est alors forcé de rester dans un état ouvert tant que le premier appareil 4 est dans un état de défaut. Cela augmente la sécurité du système 8 et empêche que les deux appareils ne puissent se trouver simultanément dans un état fermé ; même en cas de soudure accidentelle des contacts électriques de l'un de ces appareils.

On comprend que l'exemple n'est pas limitatif et que le même fonctionnement peut être obtenu lorsque c'est le deuxième appareil 6 qui subit une telle défaillance.

## Revendications

1. Dispositif de verrouillage (2) pour un tableau électrique, comportant :
- un boîtier (10) destiné à être monté sur un tableau électrique entre un premier appareil de commutation (4) et un deuxième appareil de commutation (6), chacun des appareils de commutation comportant un levier de commande (24, 28) déplaçable entre une position basse correspondant à un état ouvert et une position haute correspondant à un état fermé ;
- un organe de verrouillage (12) déplaçable en rotation autour d'un axe de rotation (Y) essentiellement perpendiculaire à une face avant du boîtier (10), l'organe de verrouillage comportant un bord de blocage (20), un premier bord de contact (16) et un deuxième bord de contact (18), le bord de blocage se trouvant entre le premier bord de contact et le deuxième bord de contact,
l'organe de verrouillage étant réversiblement déplaçable entre :
- une première position de verrouillage, dans laquelle l'organe de verrouillage bloque le levier de commande du premier appareil de commutation en position ouverte, par coopération du bord de blocage avec le levier de commande du premier appareil de commutation, le deuxième bord de contact étant aligné avec la direction de déplacement du levier de commande du deuxième appareil de commutation pour autoriser le déplacement du levier de commande du deuxième appareil de commutation vers sa position fermée, et
- une deuxième position de verrouillage, dans laquelle l'organe de verrouillage bloque le levier de commande du deuxième appareil de commutation en position ouverte, par coopération du bord de blocage avec le levier de commande du deuxième appareil de commutation, le premier bord de contact étant aligné avec la direction de déplacement du levier de commande du premier appareil de commutation pour autoriser le déplacement du levier de commande du premier appareil de commutation vers sa position fermée,
**caractérisé en ce que** :
- l'organe de verrouillage (12) est également déplaçable dans une troisième position de verrouillage intermédiaire entre la première position de verrouillage et la deuxième position de verrouillage, dans laquelle le premier levier de commande et le deuxième levier de commande des appareils de commutation sont tous deux bloqués en position ouverte par l'organe de verrouillage (12) et maintenus dans la position ouverte.

2. Dispositif de verrouillage selon la revendication 1, dans laquelle l'organe de verrouillage comporte au moins un orifice permettant l'insertion d'un outil de verrouillage, afin de maintenir l'organe de verrouillage bloqué dans au moins une position de verrouillage.

3. Dispositif de verrouillage selon l'une quelconque des revendications précédentes, dans lequel l'organe de verrouillage est en forme de plaque, notamment triangulaire ou essentiellement triangulaire ou de papillon, le bord de blocage ayant une forme arrondie, les bords de contact ayant chacun une forme rectiligne.

4. Dispositif de verrouillage selon l'une quelconque des revendications précédentes, dans lequel l'organe de verrouillage comporte une portion de préhension faisant saillie par rapport à une face principale de l'organe de verrouillage.

5. Dispositif de verrouillage selon l'une quelconque des revendications précédentes, dans lequel le dispositif de verrouillage comporte au moins un capteur configuré pour mesurer la position de l'organe de verrouillage.

6. Dispositif de verrouillage selon l'une quelconque des revendications précédentes, dans lequel le capteur est un interrupteur à contact, dans lequel l'organe de verrouillage comporte une portion de fixation et dans lequel la portion de fixation comporte une came qui coopère avec un contact mobile de l'interrupteur à contact.

7. Dispositif de verrouillage selon la revendication 5 et 6, dans lequel la portion de fixation est de forme tubulaire, s'étend selon l'axe de rotation et est reçue dans un logement formé dans le boîtier du dispositif de verrouillage.

8. Dispositif de verrouillage selon la revendication 7, dans lequel le dispositif de verrouillage comporte deux tels capteurs, disposés de façon complémentaire afin de détecter le déplacement de l'organe de verrouillage au moins entre la première position et la deuxième position.

9. Dispositif de verrouillage selon la revendication 8, dans lequel le dispositif de verrouillage est en outre configuré pour détecter que l'organe de verrouillage est dans une troisième position dans laquelle les premier et deuxième leviers de commande sont maintenus dans une position ouverte.

10. Dispositif de verrouillage selon l'une quelconque des revendications 7 à 9, dans lequel le logement recevant la portion de fixation comporte un raidisseur, tel qu'une languette en plastique, qui offre une résistance au mouvement de rotation du levier de verrouillage pour un point milieu entre la première position et la deuxième position.

11. Dispositif de verrouillage selon l'une quelconque des revendications précédentes, dans lequel le boîtier (10) du dispositif de verrouillage (2) comporte un système d'alignement et d'accrochage configuré pour coopérer avec les boîtiers (22, 26) respectifs du premier appareil de commutation (4) et du deuxième appareil de commutation (6).

12. Dispositif de verrouillage selon la revendication 11, dans lequel les parois latérales du boîtier (10) du dispositif de verrouillage (2) comportent un ou plusieurs plots de centrage (30) qui font saillie par rapport à la paroi latérale et qui sont destinés à être reçus dans des orifices de réception correspondants (32) ménagés sur les faces latérales des boîtiers (22, 26) respectifs du premier appareil de commutation (4) et du deuxième appareil de commutation (6).

13. Dispositif de verrouillage selon la revendication 11, dans lequel les parois latérales du boîtier (10) du dispositif de verrouillage (2) comportent des éléments de fixation (34), tels que des crochets, configurés pour être accrochés à des orifices ou ouvertures ménagés sur les faces latérales des boîtiers (22, 26) respectifs du premier appareil de commutation (4) et du deuxième appareil de commutation (6).

14. Système électrique, comportant un dispositif de verrouillage conforme à l'une quelconque des revendications précédentes, un premier appareil de commutation et un deuxième appareil de commutation, le dispositif de verrouillage étant monté sur un tableau électrique entre le premier appareil de commutation et le deuxième appareil de commutation.

## Patentansprüche

1. Verriegelungsvorrichtung (2) für eine Schalttafel, umfassend:
- ein Gehäuse (10), das dazu bestimmt ist, auf einer Schalttafel zwischen einem ersten Schaltgerät (4) und einem zweiten Schaltgerät (6) montiert zu werden, wobei jedes der Schaltgeräte einen Steuerhebel (24, 28) umfasst, der zwischen einer unteren Position, die einem offenen Zustand entspricht, und einer oberen Position, die einem geschlossenen Zustand entspricht, verstellbar ist;
- ein Verriegelungsglied (12), das um eine Drehachse (Y) drehend verstellbar ist, die im Wesentlichen senkrecht zu einer Vorderseite des Gehäuses (10) ist, wobei das Verriegelungsglied einen Sperrrand (20), einen ersten Kontaktrand (16) und einen zweiten Kontaktrand (18) umfasst, wobei sich die Sperrrand zwischen dem ersten Kontaktrand und dem zweiten Kontaktrand befindet,
wobei das Verriegelungsglied umkehrbar verstellbar ist zwischen:
- einer ersten Verriegelungsposition, in der das Verriegelungsglied den Steuerhebel des ersten Schaltgeräts durch Zusammenwirken des Verriegelungsrands mit dem Steuerhebel des ersten Schaltgeräts in der offenen Position verriegelt, wobei der zweite Kontaktrand mit der Bewegungsrichtung des Steuerhebels des zweiten Schaltgeräts ausgerichtet ist, um die Bewegung des Steuerhebels des zweiten Schaltgeräts in seine geschlossene Position zuzulassen, und
- einer zweiten Verriegelungsposition, in der das Verriegelungsglied den Steuerhebel des zweiten Schaltgeräts durch Zusammenwirken des Verriegelungsrands mit dem Steuerhebel des zweiten Schaltgeräts in der offenen Position verriegelt, wobei der erste Kontaktrand mit der Bewegungsrichtung des Steuerhebels des ersten Schaltgeräts ausgerichtet ist, um die Bewegung des Steuerhebels des ersten Schaltgeräts in seine geschlossene Position zuzulassen,
**dadurch gekennzeichnet, dass**:
- das Verriegelungsglied (12) auch an eine dritte Verriegelungsposition zwischen der ersten Verriegelungsposition und der zweiten Verriegelungsposition bewegbar ist, an der sowohl der erste Betätigungshebel als auch der zweite Betätigungshebel der Schaltgeräte durch das Verriegelungsglied (12) in der offenen Position blockiert und in der offenen Position gehalten werden.

2. Verriegelungsvorrichtung nach Anspruch 1, wobei das Verriegelungsglied mindestens eine Öffnung umfasst, durch die ein Verriegelungswerkzeug eingeführt werden kann, um das Verriegelungsglied in mindestens einer Verriegelungsposition verriegelt zu halten.

3. Verriegelungsvorrichtung nach einem der vorherigen Ansprüche, wobei das Verriegelungsglied plattenförmig, insbesondere dreieckig oder im Wesentlichen dreieckig oder schmetterlingsförmig ist, wobei die Sperrrand eine abgerundete Form aufweist und die Kontaktränder jeweils eine geradlinige Form aufweisen.

4. Verriegelungsvorrichtung nach einem der vorherigen Ansprüche, wobei das Verriegelungsglied einen Greifabschnitt aufweist, der in Bezug auf eine Hauptfläche des Verriegelungsglieds hervorsteht.

5. Verriegelungsvorrichtung nach einem der vorherigen Ansprüche, wobei die Verriegelungsvorrichtung mindestens einen Sensor umfasst, der konfiguriert ist, um die Position des Verriegelungsglieds zu messen.

6. Verriegelungsvorrichtung nach einem der vorherigen Ansprüche, wobei der Sensor ein Kontaktschalter ist, wobei das Verriegelungsglied einen Befestigungsabschnitt umfasst und wobei der Befestigungsabschnitt eine Nocke umfasst, die mit einem beweglichen Kontakt des Kontaktschalters zusammenwirkt.

7. Verriegelungsvorrichtung nach Anspruch 5 und 6, wobei der Befestigungsabschnitt rohrförmig ist, sich entlang der Drehachse erstreckt und in einer Aufnahme aufgenommen ist, die in dem Gehäuse der Verriegelungsvorrichtung gebildet ist.

8. Verriegelungsvorrichtung nach Anspruch 7, wobei die Verriegelungsvorrichtung zwei solche Sensoren umfasst, die komplementär angeordnet sind, um die Bewegung des Verriegelungsglieds zumindest zwischen der ersten Position und der zweiten Position zu erfassen.

9. Verriegelungsvorrichtung nach Anspruch 8, wobei die Verriegelungsvorrichtung ferner konfiguriert ist, um zu erfassen, dass das Verriegelungsglied an einer dritten Position ist, an der der erste und der zweite Steuerhebel in einer offenen Position gehalten werden.

10. Verriegelungsvorrichtung nach einem der Ansprüche 7 bis 9, wobei die Aufnahme, die den Befestigungsabschnitt aufnimmt, eine Versteifung, z. B. eine Kunststofflasche, umfasst, die der Drehbewegung des Verriegelungshebels für einen Mittelpunkt zwischen der ersten Position und der zweiten Position einen Widerstand bietet.

11. Verriegelungsvorrichtung nach einem der vorherigen Ansprüche, wobei das Gehäuse (10) der Verriegelungsvorrichtung (2) ein Ausrichtungs- und Einrastsystem umfasst, das konfiguriert ist, um mit den jeweiligen Gehäusen (22, 26) des ersten Schaltgeräts (4) und des zweiten Schaltgeräts (6) zusammenzuwirken.

12. Verriegelungsvorrichtung nach Anspruch 11, wobei die Seitenwände des Gehäuses (10) der Verriegelungsvorrichtung (2) einen oder mehrere Zentrierstifte (30) umfassend, die in Bezug auf die Seitenwand hervorstehen und dazu bestimmt sind, in entsprechenden Aufnahmeöffnungen (32) aufgenommen zu werden, die an den Seitenflächen der jeweiligen Gehäuse (22, 26) des ersten Schaltgeräts (4) und des zweiten Schaltgeräts (6) ausgebildet sind.

13. Verriegelungsvorrichtung nach Anspruch 11, wobei die Seitenwände des Gehäuses (10) der Verriegelungsvorrichtung (2) Befestigungselemente (34) umfassen, wie beispielsweise Haken, die konfiguriert sind, um in Löcher oder Öffnungen eingehakt zu werden, die an den Seitenflächen der jeweiligen Gehäuse (22, 26) des ersten Schaltgeräts (4) und des zweiten Schaltgeräts (6) ausgebildet sind.

14. Elektrisches System, umfassend eine Verriegelungsvorrichtung nach einem der vorherigen Ansprüche, ein erstes Schaltgerät und ein zweites Schaltgerät, wobei die Verriegelungsvorrichtung an einer Schalttafel zwischen dem ersten Schaltgerät und dem zweiten Schaltgerät montiert ist.

## Claims

1. A locking device (2) for an electrical switchboard, comprising:
- a housing (10) designed to be mounted on an electrical panel between a first switching device (4) and a second switching device (6), each of the switching devices comprising a control lever (24, 28) that can be moved between a low position corresponding to an open state and a high position corresponding to a closed state;
- a locking component (12) rotatable about an axis of rotation (Y) substantially perpendicular to a front face of the housing (10), the locking member comprising a blocking edge (20), a first contact edge (16) and a second contact edge (18), the blocking edge lying between the first contact edge and the second contact edge,
the locking member being reversibly movable between:
- a first locking position, in which the locking member locks the control lever of the first switchgear in the open position, by cooperation of the locking edge with the control lever of the first switchgear, the second contact edge being aligned with the direction of movement of the control lever of the second switchgear to allow movement of the control lever of the second switchgear towards its closed position, and
- a second locking position, in which the locking member locks the control lever of the second switchgear in the open position, by cooperation of the locking edge with the control lever of the second switchgear, the first contact edge being aligned with the direction of movement of the control lever of the first switchgear to allow movement of the control lever of the first switchgear towards its closed position,
**characterised in that**:
- the locking member (12) is also movable into a third locking position intermediate between the first locking position and the second locking position, in which the first control lever and the second control lever of the switching devices are both locked in the open position by the locking member (12) and held in the open position.

2. A locking device according to claim 1, in which the locking member has at least one orifice allowing the insertion of a locking tool, in order to keep the locking member locked in at least one locking position.

3. A locking device according to any one of the preceding claims, in which the locking member is in the form of a plate, in particular triangular or essentially triangular or butterfly-shaped, the blocking edge having a rounded shape, the contact edges each having a rectilinear shape.

4. A locking device according to any one of the preceding claims, in which the locking member comprises a gripping portion projecting with respect to a main face of the locking member.

5. A locking device according to any one of the preceding claims, wherein the locking device comprises at least one sensor configured to measure the position of the locking member.

6. A locking device according to any one of the preceding claims, in which the sensor is a contact switch, in which the locking member comprises a fixing portion and in which the fixing portion comprises a cam which cooperates with a movable contact of the contact switch.

7. A locking device according to claims 5 and 6, in which the fixing portion is tubular in shape, extends along the axis of rotation and is received in a housing formed in the casing of the locking device.

8. A locking device according to claim 7, wherein the locking device comprises two such sensors, arranged in a complementary manner in order to detect the displacement of the locking member at least between the first position and the second position.

9. A locking device according to claim 8, wherein the locking device is further configured to detect that the locking member is in a third position in which the first and second control levers are held in an open position.

10. A locking device according to any one of claims 7 to 9, in which the housing receiving the fixing portion comprises a stiffener, such as a plastic tongue, which provides resistance to the rotational movement of the locking lever for a mid-point between the first position and the second position.

11. A locking device according to any one of the preceding claims, in which the housing (10) of the locking device (2) comprises an alignment and latching system configured to cooperate with the respective housings (22, 26) of the first switching device (4) and of the second switching device (6).

12. A locking device according to Claim 11, in which the side walls of the housing (10) of the locking device (2) have one or more centring studs (30) which project from the side wall and which are intended to be received in corresponding receiving openings (32) formed on the side faces of the respective housings (22, 26) of the first switching device (4) and of the second switching device (6).

13. A locking device according to claim 11, in which the side walls of the housing (10) of the locking device (2) comprise fixing elements (34), such as hooks, configured so as to be hooked onto orifices or openings formed on the side faces of the respective housings (22, 26) of the first switching device (4) and of the second switching device (6).

14. An electrical system, comprising an interlocking device in accordance with any one of the preceding claims, a first switching apparatus and a second switching apparatus, the interlocking device being mounted on an electrical panel between the first switching apparatus and the second switching apparatus.
